# EUROPÄISCHE PATENTANMELDUNG

(11) **EP 4 253 459 A2**
(43) Veröffentlichungstag der Anmeldung: **04.10.2023**
(21) Anmeldenummer: 23191716.2
(22) Anmeldetag: 25.04.2019
(51) Int. Cl.: C08J 9/232

(54) **WERKZEUG ZUR VERARBEITUNG VON KUNSTSTOFFPARTIKELMATERIAL ZUR HERSTELLUNG EINES PARTIKELSCHAUMBAUTEILS**

(30) Priorität: 27.04.2018 DE 102018110238
(62) Teilanmeldung aus: 19171029.2
(71) Anmelder: Siegfried Hofmann GmbH, 96215 Lichtenfels (DE); FOX Velution GmbH, 96215 Lichtenfels (DE)
(72) Erfinder: Beck, Jonas, 96050 Bamberg (DE); Schütz, Johannes, 96052 Bamberg (DE); Propp, Stefan, 96279 Weidhausen bei Coburg (DE); Lieke, Robin, 96247 Michelau (DE); Hofmann, Stefan, 96215 Lichtenfels (DE); Vetter, Jörg, 64839 Münster (DE); Lucht, Mirjam, 91593 Burgbernheim (DE)
(74) Vertreter: Hafner & Kohl PartmbB

(57) **Zusammenfassung**

Werkzeug (1) zur Verarbeitung von Kunststoffpartikelmaterial zur Herstellung eines, insbesondere dickwandigen, Partikelschaumbauteils, umfassend einen eine durch mehrere Werkzeugkörperwandungsabschnitte (2a - 2d) begrenzte Werkzeugkavität (3) aufweisenden Werkzeugkörper (2), sowie wenigstens ein sich von wenigstens einem Werkzeugkörperwandungsabschnitt (2a - 2d) abragend in die Werkzeugkavität (3) erstreckend angeordnetes oder ausgebildetes Energieführungselement (5), welches eingerichtet ist, im Betrieb des Werkzeugs (1) Energie in ein vermittels des Werkzeugs (1) verarbeitbares oder zu verarbeitendes, insbesondere in der Werkzeugkavität (3) befindliches, Kunststoffpartikelmaterial einzuführen und/oder Energie aus einem vermittels des Werkzeugs (1) verarbeitbaren oder zu verarbeitenden, insbesondere in der Werkzeugkavität (3) befindlichen, Kunststoffpartikelmaterial abzuführen.

## Beschreibung

Die Erfindung betrifft ein Werkzeug zur Verarbeitung von Kunststoffpartikelmaterial zur Herstellung eines, insbesondere dickwandigen bzw. großvolumigen, Partikelschaumbauteils, umfassend einen eine durch mehrere Werkzeugkörperwandungsabschnitte begrenzte Werkzeugkavität aufweisenden Werkzeugkörper.

Entsprechende Werkzeuge zur Verarbeitung von Kunststoffpartikelmaterial sind aus dem technischen Gebiet der Verarbeitung bzw. Herstellung von Partikelschaumbauteilen in einer Vielzahl unterschiedlicher Ausführungen dem Grunde nach bekannt.

Entsprechende Werkzeuge umfassen typischerweise einen Werkzeugkörper, welcher eine durch mehrere Werkzeugkörperwandungsabschnitte begrenzte Werkzeugkavität aufweist. Im Rahmen des bestimmungsgemäßen Betriebs des Werkzeugs wird die Werkzeugkavität mit partikulärem Kunststoffpartikelmaterial befüllt und wenigstens eine Maßnahme zum Verbinden des partikulären Kunststoffpartikelmaterials - typischerweise beinhaltet die Maßnahme das Einbringen von thermischer Energie in die Werkzeugkavität - durchgeführt. Die thermische Energie kann rein konduktiv bzw. konvektiv, d. h. insbesondere dampffrei bzw. dampflos, eingebracht werden, sodass ein dampffreies bzw. dampfloses Schäumen möglich ist.

Insbesondere die dampffreie bzw. dampflose Herstellung von großvolumigen bzw. dickwandigen Partikelschaumbauteilen stellt regelmäßig eine Herausforderung dar, als nur schwer sicherzustellen ist, dass in das Kunststoffpartikelmaterial eine ausreichende Menge an Energie, d. h. typischerweise thermische Energie, eingebracht wird. Die Problematik bei der dampffreien bzw. dampflosen Herstellung von großvolumigen bzw. dickwandigen Partikelschaumbauteilen mit gängigen Werkzeugen besteht insbesondere darin, in bezogen auf das Bauteilvolumen innere Bereiche des herzustellenden Partikelschaumbauteils eine ausreichende Menge an Energie einzubringen, sodass (auch) hier eine gewünschte Verbindung des Kunststoffpartikelmaterials stattfinden kann.

Der Erfindung liegt die Aufgabe zugrunde, ein demgegenüber verbessertes Werkzeug zur Verarbeitung von partikulärem Kunststoffpartikelmaterial zur Herstellung eines, insbesondere großvolumigen, Partikelschaumbauteils anzugeben.

Die Aufgabe wird durch die Gegenstände der unabhängigen Ansprüche, d. h. insbesondere ein Werkzeug gemäß dem unabhängigen Anspruch 1, gelöst. Die hierzu abhängigen Ansprüche betreffen mögliche Ausführungsformen der Gegenstände der unabhängigen Ansprüche.

Das hierin beschriebene Werkzeug dient zur Verarbeitung von partikulärem Kunststoffpartikelmaterial zur Herstellung eines, insbesondere dickwandigen bzw. großvolumigen, Partikelschaumbauteils. Das Werkzeug ist entsprechend zur Verarbeitung von partikulärem Kunststoffpartikelmaterial zur Herstellung eines, insbesondere dickwandigen bzw. großvolumigen, Partikelschaumbauteils, eingerichtet.

Das vermittels des Werkzeugs verarbeitbare Kunststoffpartikelmaterial weist vor seiner Verarbeitung vermittels des hierin beschriebenen Werkzeugs bzw. im Rahmen des hierin beschriebenen Verfahrens eine partikuläre Struktur auf; das Kunststoffpartikelmaterial liegt vor seiner Verarbeitung mit dem hierin beschriebenen Werkzeug bzw. im Rahmen des hierin beschriebenen Verfahrens sonach typischerweise als Vielzahl an einzelnen, z. B. kugeligen, länglichen, insbesondere stäbchenförmigen, oder mahlgutartigen Kunststoffpartikelmaterialpartikeln vor.

Bei dem Kunststoffpartikelmaterial bzw. entsprechenden Partikeln kann es sich um ein noch nicht expandiertes Kunststoffpartikelmaterial bzw. noch nicht expandierte Partikel, um ein vorexpandiertes Kunststoffpartikelmaterial bzw. vorexpandierte Partikel oder um ein vollständig expandiertes Kunststoffpartikelmaterial bzw. vollständig expandierte Partikel handeln. Für ein noch nicht expandiertes Kunststoffpartikelmaterial bzw. entsprechende Partikel wie auch für ein vorexpandiertes Kunststoffpartikelmaterial bzw. entsprechende Partikel gilt, dass diese(s) typischerweise expandierbar ist bzw. sind, d. h. in einem Expansionsvorgang (weiter) expandiert werden können. Für ein vollständig expandiertes Kunststoffpartikelmaterial bzw. entsprechende Partikel gilt, dass diese(s) typischerweise nicht mehr (weiter) expandiert werden kann bzw. können. Das hierin beschriebene Werkzeug ist insbesondere zur rein konduktiven bzw. konvektiven, bevorzugt dampffreien bzw. dampflosen, Verarbeitung von einem vollständig expandierten Kunststoffpartikelmaterial bzw. entsprechenden Partikel eingerichtet.

Insbesondere im Zusammenhang mit einem vollständig expandierten Kunststoffmaterial bzw. entsprechenden Partikeln kann zur Verdichtung bzw. Verbindung eine Aufbringung von Druck bzw. eine Kompression erforderlich bzw. zweckmäßig sein. Eine entsprechende Druck- bzw. Kompressionsaufbringung kann z. B. werkzeugtechnisch, d. h. z. B. durch eine Bewegung eines Werkzeugkörperwandungsabschnitts eines relativ zu einem zweiten Werkzeugkörperwandungsabschnitts, realisiert werden. Insbesondere kommt die Verwendung eines Tauchkantenwerkzeugs in Betracht.

Bei einem vermittels des Werkzeugs herstellbaren Partikelschaumbauteil kann es sich um ein teilweise fertiggestelltes oder vollständig fertiggestelltes Produkt, d. h. um ein Halb- oder Vollfabrikat, handeln. Ein teilweise fertiggestelltes Produkt wird typischerweise wenigstens einem weiteren Be- oder Verarbeitungsschritt zugeführt. Ein vollständig fertiggestelltes Produkt wird typischerweise keinem weiteren Be- oder Verarbeitungsschritt zugeführt.

Das Werkzeug umfasst einen Werkzeugkörper. Der Werkzeugkörper umfasst mehrere Werkzeugkörperwandungsabschnitte, welche jeweils eine eigene Werkzeugwandung oder einen Abschnitt einer solchen bilden können. Die Werkzeugkörperwandungsabschnitte begrenzen bzw. definieren eine Werkzeugkavität. Die Werkzeugkavität ist mit einem vermittels des Werkzeugs zur Herstellung eines Partikelschaumbauteils verarbeitbaren bzw. zu verarbeitenden Kunststoffpartikelmaterial befüllbar. Die Werkzeugkavität kann grundsätzlich mit sämtlichen Kunststoffpartikelmaterialien befüllt werden, sodass lediglich beispielhaft auf expandiertes Polystyrol verwiesen wird.

Einzelne, mehrere oder sämtliche Werkzeugkörperwandungsabschnitte sind aus einem thermisch leitfähigen Material, insbesondere einem thermisch leitfähigen Metall, gebildet, sodass diese grundsätzlich als Energieübertragungselemente dienen können. Insbesondere können die der Werkzeugkavität zugewandten Flächen jeweiliger Werkzeugwandungsabschnitte als Energieübertragungsflächen dienen, über welche thermische Energie in in der Werkzeugkavität befindliches Kunststoffpartikelmaterial einbringbar ist.

Einzelne, mehrere oder sämtliche Werkzeugkörperwandungsabschnitte können mit einer Vielzahl an, typischerweise bohrungsartigen bzw. -förmigen, Öffnungen versehen, über welche ein Unterdruck erzeugt bzw. ein im Rahmen der Verarbeitung des Kunststoffpartikelmaterials entstehendes Medium, d. h. z. B. ein Gas und/oder eine Flüssigkeit, entweichen kann. Entsprechende Öffnungen können auch dazu dienen, Dampf, insbesondere Heißdampf, in die Werkzeugkavität einzubringen.

Im Zusammenhang mit einem im Rahmen der Verarbeitung des Kunststoffpartikelmaterials entstehenden Medium, d. h. z. B. einem Gas und/oder einer Flüssigkeit, ist allgemein zu erwähnen, dass ein solches im Rahmen der Verarbeitung des Kunststoffpartikelmaterials entstehendes Medium gegebenenfalls auch einen Expansions- bzw. Schäumvorgang bedingen bzw. begünstigen kann. Dies gilt insbesondere für ein expandierbares Kunststoffpartikelmaterial bzw. entsprechende Partikel.

Wie sich im Weiteren ergibt, dient das Werkzeug zur Verarbeitung von Kunststoffpartikelmaterial, insbesondere zur Herstellung bzw. dickwandiger bzw. großvolumiger Partikelschaumbauteile. Bei dickwandigen bzw. großvolumigen Partikelschaumbauteilen handelt es sich insbesondere um solche Partikelschaumbauteile, mit einer räumlichen Ausdehnung in wenigstens einer Raumrichtung von mehreren Zentimetern bzw. mehreren Dezimetern, d. h. insbesondere einer Wandstärke von mehreren Zentimetern bzw. mehreren Dezimetern. Ein vermittels des Werkzeugs herstellbares Partikelschaumbauteil kann sonach z. B. eine Höhe und/oder Breite und/oder Tiefe von mehreren Zentimetern bzw. mehreren Dezimetern aufweisen. Allgemein gilt, dass das Werkzeug insbesondere zur, bevorzugt dampffreien bzw. dampflosen, Herstellung von Partikelschaumbauteilen dient, bei welchen sich mit gängigen Werkzeugen die eingangs erwähnte Problematik stellt, in bezogen auf das Bauteilvolumen innere Bereiche des herzustellenden Partikelschaumbauteils eine ausreichende Menge an Energie einzubringen, sodass (auch) hier eine gewünschte Verbindung, d. h. insbesondere eine gewünschte Versinterung bzw. Verschmelzung, des Kunststoffpartikelmaterials stattfinden kann.

Das hierin beschriebene Werkzeug begegnet dieser Problematik durch ein oder mehrere Energieführungselemente, welche eingerichtet sind, im Betrieb des Werkzeugs Energie, hierbei handelt es sich, wie sich im Weiteren ergibt, insbesondere um thermische Energie und/oder um Schwingungsenergie, in ein vermittels des Werkzeugs verarbeitbares bzw. zu verarbeitendes, insbesondere in der Werkzeugkavität befindliches, Kunststoffpartikelmaterial einzuführen und/oder Energie aus einem vermittels des Werkzeugs verarbeitbaren bzw. zu verarbeitenden, insbesondere in der Werkzeugkavität befindlichen, Kunststoffpartikelmaterial abzuführen. Die Energie führenden Eigenschaften des Energieführungselements ermöglichen insbesondere eine gezielte lokale Übertragung von Energie zwischen dem Energieführungselement und einem in der Werkzeugkavität befindlichen Kunststoffpartikelmaterial. Aufgrund seiner Energie führenden Eigenschaften kann ein entsprechendes Energieführungselement sonach im Allgemeinen auch als Energie führendes Element bezeichnet bzw. erachtet werden.

Ein entsprechendes Energieführungselement ist sich von wenigstens einem Werkzeugkörperwandungsabschnitt abragend in die Werkzeugkavität erstreckend angeordnet oder ausgebildet. Ein entsprechendes Energieführungselement ist damit entsprechend räumlich angeordnet und ausgerichtet, um Energie, etwa im Rahmen einer einen Verbindungsvorgang des Kunststoffpartikelmaterials in der Werkzeugkavität herbeiführenden Maßnahme, in bezogen auf das Volumen der Werkzeugkavität innere Bereiche der Werkzeugkavität bzw. bezogen auf ein Bauteilvolumen eines vermittels des Werkzeugs herzustellenden Partikelschaumbauteils innere Bereiche des Partikelschaumbauteils einzubringen bzw. einzuführen. Gleichermaßen ist ein entsprechendes Energieführungselement räumlich angeordnet und ausgebildet, um Energie, etwa im Rahmen eines einer entsprechenden Maßnahme folgenden Kühlvorgangs, bezogen auf das Volumen der Werkzeugkavität inneren Bereichen der Werkzeugkavität bzw. bezogen auf das Bauteilvolumen eines vermittels des Werkzeugs herzustellenden Partikelschaumbauteils inneren Bereichen des Partikelschaumbauteils auszubringen bzw. abzuführen. Die räumliche Anordnung und Ausrichtung des Energieführungselements ermöglicht damit eine gezielte lokale und damit verbesserte Energieübertragung zwischen dem Energieführungselement und einem vermittels des Werkzeugs herzustellenden Partikelschaumbauteils; dies gilt insbesondere für die Energieübertragung zwischen dem Energieführungselement und bezogen auf das Bauteilvolumen inneren Bereichen eines vermittels des Werkzeugs zu verarbeitenden Kunststoffpartikelmaterials bzw. eines vermittels des Werkzeugs herzustellenden Partikelschaumbauteils. Der Begriff Energieübertragung beinhaltet, wie sich aus vorstehenden Ausführungen ergibt, dabei insbesondere die gezielte lokale Einführung von Energie in die Werkzeugkavität respektive ein in der Werkzeugkavität befindliches Kunststoffpartikelmaterial sowie die gezielte lokale Abführung von Energie aus der Werkzeugkavität respektive einem in der Werkzeugkavität befindlichen Kunststoffpartikelmaterial.

Ein entsprechendes Energieführungselement kann integral (einstückig) mit einem Werkzeugkörperwandungsabschnitt ausgebildet sein. Denkbar ist es jedoch auch, dass ein entsprechendes Energieführungselement als gesondertes Bauteil mit einem entsprechenden Werkzeugkörperwandungsabschnitt stabil verbunden ist. Hierzu kommen grundsätzlich sämtliche formschlüssige und/oder kraftschlüssige und/oder stoffschlüssige Verbindungsarten in Betracht, sodass lediglich beispielhaft auf Klemm-, Spann-, Schraub-, Niet-, Schweiß- oder Klebeverbindungen verwiesen wird.

Um in wie beschriebener Weise, sich von einem Werkzeugkörperwandungsabschnitt abragend in die Werkzeugkavität erstreckend angeordnet oder ausgebildet zu sein, ist ein entsprechendes Energieführungselement typischerweise länglich ausgebildet. Ein entsprechendes Energieführungselement weist damit typischerweise einen eine Längsachse des Energieführungselements definierenden länglichen Energieführungselementkörper auf. Der Energieführungselementkörper kann z. B. eine Länge von mehreren Zentimetern bzw. mehreren Dezimetern aufweisen.

Der Energieführungselementkörper kann als, z. B. fingerartiger bzw. -förmiger bzw. stiftartiger bzw. -förmiger, sich von einem Werkzeugkörperwandungsabschnitt in die Werkzeugkavität erstreckender Fortsatz ausgebildet sein. Die konkrete Form bzw., insbesondere querschnittliche, Geometrie des Energieführungselementkörpers ist dabei grundsätzlich frei wählbar. Der Energieführungselementkörper kann z. B. eine geradlinig verlaufende zylinderartige bzw. -förmige Form aufweisen; es sind jedoch z. B. auch zumindest abschnittsweise gebogene bzw. gewölbte Formen sowie wie Freiformen denkbar.

Die Abmessungen bzw. Längenabmessungen eines entsprechenden Energieführungselements, d. h. insbesondere die Abmessungen bzw. Längenabmessungen eines entsprechenden Energieführungselementkörpers, sind typischerweise mit der Maßgabe einer möglichst großen Energieübertragungsfläche in das vermittels des Werkzeugs zu verarbeitende in der Werkzeugkavität befindliche Kunststoffpartikelmaterial, d. h. insbesondere in das Innere des vermittels des Werkzeugs zu verarbeitenden in der Werkzeugkavität befindlichen Kunststoffpartikelmaterials, gewählt. Die Abmessungen eines entsprechenden Energieführungselements, d. h. insbesondere die die Erstreckung in die Werkzeugkavität definierenden Längenabmessungen des Energieführungselements, sind sonach typischerweise auf Grundlage der konkreten Abmessungen der Werkzeugkavität gewählt.

Ein entsprechendes Energieführungselement kann für ein, insbesondere durch den Abstand zwischen zwei einander gegenüberliegend angeordneten Werkzeugkörperwandungsabschnitten definiertes, Längen-, Breiten-, oder Tiefenmaß, d. h. je nach Anordnung bzw. Ausrichtung des Energieführungselements eine bestimmte Länge, Breite oder Tiefe, der Werkzeugkavität insbesondere um wenigstens 20%, insbesondere 20 - 50%, bevorzugt mehr als 50%, des Längen-, Breiten-, oder Tiefenmaßes der Werkzeugkavität in die Werkzeugkavität erstreckend angeordnet oder ausgebildet sein. Für eine beispielhafte Betrachtung des Querschnitts einer Werkzeugkavität gilt, dass sich ein entsprechendes Energieführungselement für konkrete Abmessungen einer Werkzeugkavität sonach um wenigstens 20%, insbesondere 20 - 50%, bevorzugt mehr als 50%, über den Querschnitt der Werkzeugkavität in die Werkzeugkavität erstrecken kann. Analoges gilt für eine beispielhafte Betrachtung des Längsschnitts einer Werkzeugkavität. Selbstverständlich sind, gegebenenfalls sogar deutliche, Abweichungen der genannten Werte nach oben oder unten denkbar.

Hinsichtlich der räumlichen Anordnung und Ausrichtung eines entsprechenden Energieführungselements sind grundsätzlich diverse Möglichkeiten gegeben; die räumliche Anordnung und Ausrichtung eines entsprechenden Energieführungselements ist typischerweise im Hinblick auf konkrete funktionelle und konstruktive Gegebenheiten des Werkzeugs zu wählen.

Ein entsprechendes Energieführungselement sich z. B. von einem ersten Werkzeugkörperwandungsabschnitt abragend in Richtung eines dem ersten Werkzeugkörperwandungsabschnitt gegenüberliegend angeordneten oder ausgebildeten zweiten Werkzeugkörperwandungsabschnitts erstreckend angeordnet oder ausgebildet sein. zweiten Werkzeugkörperwandungsabschnitts, d. h. z. B. einer zweiten Seitenwandung des Werkzeugs, erstreckend angeordnet oder ausgebildet sein. Insbesondere kann ein entsprechendes Energieführungselement sich z. B. von einem ersten Werkzeugkörperwandungsabschnitt abragend bis zu einem dem ersten Werkzeugkörperwandungsabschnitt gegenüberliegend angeordneten oder ausgebildeten zweiten Werkzeugkörperwandungsabschnitts erstreckend angeordnet oder ausgebildet sein. Ein Energieführungselement kann sonach als sich zumindest abschnittsweise, gegebenenfalls vollständig, zwischen zwei gegenüberliegenden Werkzeugwandungsabschnitten durch die Werkzeugkavität erstreckendes Schwert erachtet bzw. bezeichnet werden.

Demnach kann ein Energieführungselement sich z. B. von einem die Werkzeugkavität seitlich begrenzenden ersten Werkzeugkörperwandungsabschnitt, d. h. z. B. einer ersten Seitenwandung des Werkzeugs, abragend in Richtung eines bzw. bis zu einem diesem gegenüberliegend angeordneten oder ausgebildeten die Werkzeugkavität seitlich begrenzenden zweiten Werkzeugkörperwandungsabschnitts, d. h. z. B. einer zweiten Seitenwandung des Werkzeugs, erstreckend angeordnet oder ausgebildet sein. In analoger Weise kann ein Energieführungselement sich z. B. von einem die Werkzeugkavität bodenseitig begrenzenden ersten Werkzeugkörperwandungsabschnitt, d. h. z. B. einer Bodenwandung des Werkzeugs, abragend in Richtung eines bzw. bis einem diesem gegenüberliegend angeordneten oder ausgebildeten die Werkzeugkavität deckenseitig begrenzenden zweiten Werkzeugkörperwandungsabschnitts, d. h. z. B. einer Deckenwandung des Werkzeugs, erstreckend angeordnet oder ausgebildet sein.

Allgemein gilt, dass sich ein entsprechendes Energieführungselement parallel zu wenigstens einem Werkzeugkörperwandungsabschnitt in die bzw. durch die Werkzeugkavität erstrecken kann. Denkbar ist es jedoch auch, dass sich ein entsprechendes Energieführungselement nicht parallel zu wenigstens einem, d. h. insbesondere nicht parallel zu einem einzigen Werkzeugkörperwandungsabschnitt, in die bzw. durch die Werkzeugkavität erstreckt; ein Energieführungselement kann sich demnach z. B. schräg bezüglich wenigstens einem Werkzeugkörperwandungsabschnitt in die bzw. durch die Werkzeugkavität erstrecken.

Ein entsprechendes Energieführungselement kann an oder in einem nicht bewegbar gelagerten Werkzeugkörperwandungsabschnitt oder an oder in einem relativ zu wenigstens einem weiteren Werkzeugkörperwandungsabschnitt bewegbar gelagerten Werkzeugkörperwandungsabschnitt angeordnet oder ausgebildet sein. Eine aus der bewegbaren Lagerung des Werkzeugkörperwandungsabschnitts resultierende Bewegung stellt typischerweise eine translatorische Bewegung, insbesondere eine lineare Bewegung, entlang einer Translationsachse dar. Ein relativ zu wenigstens einem weiteren Werkzeugkörperwandungsabschnitt bewegbar gelagerter Werkzeugkörperwandungsabschnitt kann z. B. zwischen einer eine Offenstellung des Werkzeugs, in welcher eine Zugangsmöglichkeit in die Werkzeugkavität geschaffen ist, definierenden ersten Betriebsstellung und einer eine Schließstellung des Werkzeugs, in welcher keine Zugangsmöglichkeit in die Werkzeugkavität geschaffen ist, definierenden zweiten Betriebsstellung, bewegbar sein.

Einem bewegbar gelagerten Werkzeugkörperwandungsabschnitt kann eine wenigstens ein mit diesem direkt oder indirekt (d. h. unter Zwischenschaltung wenigstens eines Bauteils) koppelbares oder gekoppeltes kraftübertragendes Antriebselement umfassende, z. B. hydraulische, pneumatische, oder motorische, Antriebseinrichtung zugeordnet sein, welche zur Erzeugung einer den Werkzeugkörperwandungsabschnitt in eine Bewegung versetzenden Bewegungskraft eingerichtet ist.

Alternativ oder ergänzend kann auch ein entsprechendes Energieführungselement unabhängig von einem entsprechenden Werkzeugkörperwandungsabschnitt bewegbar gelagert sein. Es ist demnach denkbar, dass ein entsprechendes Energieführungselement relativ zu einem entsprechenden Werkzeugkörperwandungsabschnitt, an welchem dieses angeordnet oder ausgebildet ist, bewegbar gelagert ist. Eine aus der bewegbaren Lagerung des Energieführungselements resultierende Bewegung stellt typischerweise eine translatorische Bewegung, insbesondere eine lineare Bewegung, entlang einer Translationsachse dar. Ein entsprechendes Energieführungselement kann z. B. zwischen einer ersten Stellung, in welcher sich das Energieführungselement um ein erstes Maß von dem Werkzeugkörperwandungsabschnitt abragend in die Werkzeugkavität erstreckt, und wenigstens einer zweiten Stellung, in welcher sich das Energieführungselement um ein von dem ersten Maß verschiedenes zweites Maß von dem Werkzeugkörperwandungsabschnitt abragend in die Werkzeugkavität erstreckt, bewegbar gelagert sein. Die erste oder zweite Stellung des Energieführungselements kann eine vollständig in den Werkzeugkörperwandungsabschnitt eingefahrene Stellung des Energieführungselements darstellen, in welcher (sich) das freie Ende des Energieführungselements nicht in die Werkzeugkavität ragt bzw. erstreckt, sodass die der Werkzeugkavität zugewandte Oberfläche des Werkzeugkörperwandungsabschnitts (im Wesentlichen) eben ist; entsprechend kann die jeweilige zweite oder erste Stellung des Energieführungselements eine ausgefahrene Stellung darstellen, in welcher (sich) wenigstens das freie Ende des Energieführungselements in die Werkzeugkavität ragt bzw. erstreckt, sodass die der Werkzeugkavität zugewandte Oberfläche des Werkzeugkörperwandungsabschnitts aufgrund des sich in die Werkzeugkavität abragend erstreckenden Energieführungselements nicht eben ist.

Eine entsprechende Bewegung eines entsprechend bewegbar gelagerten Energieführungselements kann sonach insbesondere dazu dienen, das Energieführungselement möglichst weit in das Innere der Werkzeugkavität hereinzufahren bzw. in umgekehrter Weise, z. B. zu Entnahme- bzw. Entformungszwecken eines Partikelschaumbauteils aus der Werkzeugkavität, möglichst weist aus dem Inneren der Werkzeugkavität herauszufahren.

Zur Aufnahme eines entsprechenden bewegbar gelagerten Energieführungselements ist der Werkzeugkörperwandungsabschnitt typischerweise mit wenigstens einem, z. B. bohrungsartigen bzw. -förmigen, Lagerungsabschnitt - hierbei kann es sich konkret z. B. um eine den Werkzeugkörperwandungsabschnitt zumindest abschnittsweise durchsetzende Lagerbohrung handeln, in welcher ein entsprechendes Energieführungselement (typischerweise passgenau) einsetzbar ist - ausgestattet, in welchem das Energieführungselement bewegbar lagerbar bzw. gelagert ist.

Einem bewegbar gelagerten Energieführungselement kann eine wenigstens ein mit diesem direkt oder indirekt (d. h. unter Zwischenschaltung wenigstens eines Bauteils) koppelbares oder gekoppeltes kraftübertragendes Antriebselement umfassende, z. B. hydraulische, pneumatische, oder motorische, Antriebseinrichtung zugeordnet sein, welche zur Erzeugung einer das Energieführungselement in eine Bewegung versetzenden Bewegungskraft eingerichtet ist.

Ein entsprechendes Energieführungselement ist typischerweise aus einem thermisch leitfähigen Material, d. h. insbesondere einem thermisch leitfähigen Metall, bzw. einer thermisch leitfähigen Materialstruktur gebildet. Es kommen insbesondere besonders gut thermisch leitfähige Materialien bzw. Materialstrukturen in Frage. In diesem Zusammenhang ist es auch denkbar, dem das Energieführungselement bildenden Material thermisch leitfähige Partikel zuzugeben, um die thermische Leitfähigkeit bzw. die Energieübertragungseigenschaften auf ein bestimmtes Maß einzustellen.

Ein entsprechendes Energieführungselement kann wenigstens einen mit wenigstens einem Energie führenden Medium, insbesondere einem Gas und/oder einer Flüssigkeit, befüllbaren und/oder von wenigstens einem Energie führenden Medium, insbesondere einem Gas und/oder einer Flüssigkeit, durchströmbaren Innenraum aufweisen. Durch Ausbilden eines entsprechenden Energieführungselements mit einem entsprechenden Innenraum können die Energieübertragungseigenschaften des Energieführungselements - dieses ist, wie erwähnt, typischerweise bereits von Haus aus aus einem eine gewisse Energieübertragung erlaubenden Material, d. h. z. B. einem Metall, gebildet - erweitert bzw. verbessert werden, als das Energieführungselement mit einem Energie führenden, d. h. z. B. auf eine bestimmte Temperatur temperierten, Medium befüllt oder von einem Medium durchströmt werden kann.

Ein entsprechender Innenraum kann z. B. als ein mit einem entsprechenden Medium befüllbares Reservoir ausgebildet sein. Ein entsprechendes Reservoir kann z. B. durch eine, gegebenenfalls bohrungsartige bzw. -förmige, Ausnehmung in dem Energieführungselement ausgebildet sein.

Ein entsprechender Innenraum kann z. B. auch als eine wenigstens einen Strömungskanal umfassende Strömungskanalstruktur ausgebildet sein. Ein entsprechender Strömungskanal kann sich insbesondere unterhalb einer im nicht mit einem Kunststoffpartikelmaterial befüllten Zustand des Werkzeugs freiliegend in die Werkzeugkavität ragenden Oberfläche des Energieführungselements zumindest abschnittsweise entlang dieser erstecken. Ein entsprechender Strömungskanal kann sonach eine gezielte Energieübertragung über eine in die Werkzeugkavität ragende Oberfläche des Energieführungselements ermöglichen. Die Längserstreckung eines entsprechenden Strömungskanals kann geradlinig oder nicht geradlinig, d. h. z. B. mäanderartig bzw. -förmig, sein. Ein entsprechender Strömungskanal kann mit, gegebenenfalls vortemperierten, gasförmigen und/oder flüssigen Temperiermedien durchströmbar sein. Selbstverständlich können entsprechende Strömungskanäle auch in übrigen Werkzeugwandungsabschnitten des Werkzeugs vorhanden sein.

Mit der gleichen Zielsetzung wie ein entsprechender energieführungselementseitiger Innenraum kann ein entsprechendes Energieführungselement auch ein oder mehrere steuerbare Temperiereinrichtungen, z. B. in Form von steuerbaren elektrischen Heizeinrichtungen bzw. Heizelementen, umfassen, über welche(s) je nach Anordnung und Ausrichtung thermische Energie in die Werkzeugkavität einführbar oder aus dieser abführbar ist. Eine entsprechende Temperiereinrichtung kann in einem hierfür vorgesehenen, z. B. bohrungsartigen bzw. -förmigen, Aufnahmeraum des Energieführungselements angeordnet oder ausgebildet sein. Ein entsprechender Aufnahmeraum kann insbesondere unterhalb einer im nicht mit einem Kunststoffpartikelmaterial befüllten Zustand des Werkzeugs freiliegend in die Werkzeugkavität ragenden Oberfläche, insbesondere sich zumindest abschnittsweise entlang dieser ersteckend, angeordnet oder ausgebildet sein. Mithin kann sich eine entsprechende Temperiereinrichtung insbesondere unterhalb einer im nicht mit einem Kunststoffpartikelmaterial befüllten Zustand des Werkzeugs freiliegend in die Werkzeugkavität ragenden Oberfläche zumindest abschnittsweise entlang dieser ersteckend angeordnet oder ausgebildet sein. Selbstverständlich können entsprechende Temperiereinrichtungen auch in übrigen Werkzeugwandungsabschnitten des Werkzeugs vorhanden sein.

Mit der gleichen Zielsetzung wie ein entsprechender energieführungselementseitiger Innenraum kann ein entsprechendes Energieführungselement alternativ oder ergänzend auch ein oder mehrere Wärmeübertragungselemente, eine Heat-Pipes, umfassen, über welche(s) je nach Anordnung und Ausrichtung thermische Energie in die Werkzeugkavität einführbar oder aus dieser abführbar ist. Ein entsprechendes Wärmeübertragungselement kann in einem hierfür vorgesehenen, z. B. bohrungsartigen bzw. -förmigen, Aufnahmeraum des Energieführungselements angeordnet oder ausgebildet sein. Ein entsprechender Aufnahmeraum kann insbesondere unterhalb einer im nicht mit einem Kunststoffpartikelmaterial befüllten Zustand des Werkzeugs freiliegend in die Werkzeugkavität ragenden Oberfläche, insbesondere sich zumindest abschnittsweise entlang dieser ersteckend, angeordnet oder ausgebildet sein. Mithin kann sich ein entsprechendes Wärmeübertragungselement insbesondere unterhalb einer im nicht mit einem Kunststoffpartikelmaterial befüllten Zustand des Werkzeugs freiliegend in die Werkzeugkavität ragenden Oberfläche zumindest abschnittsweise entlang dieser ersteckend angeordnet oder ausgebildet sein. Selbstverständlich können entsprechende Wärmeübertragungselemente auch in übrigen Werkzeugwandungsabschnitten des Werkzeugs vorhanden sein.

Ein entsprechendes Energieführungselement kann alternativ oder ergänzend auch wenigstens eine Schwingungsenergie, d. h. insbesondere Vibrationsenergie, erzeugende Schwingungserzeugungseinrichtung, z. B. in Form einer Schallwandlereinrichtung, umfassen oder mit wenigstens einer Schwingungs- bzw. Vibrationsenergie erzeugenden Schwingungserzeugungseinrichtung, z. B. in Form einer Schallwandlereinrichtung, gekoppelt sein, insbesondere derart, dass über das Energieführungselement Schwingungs- bzw. Vibrationsenergie in die Werkzeugkavität bzw. ein in der Werkzeugkavität befindliches Kunststoffpartikelmaterial einbringbar ist. Die Erzeugung und Einbringung entsprechender Schwingungs- bzw. Vibrationsenergie in die Werkzeugkavität bzw. ein in der Werkzeugkavität befindliches Kunststoffpartikelmaterial kann zu einem Verdichten bzw. Vorverdichten des in der Werkzeugkavität befindlichen Kunststoffpartikelmaterials führen. Eine entsprechende Verdichtung bzw. Vorverdichtung des in der Werkzeugkavität befindlichen Kunststoffpartikelmaterials kann sich positiv auf den Expansionsvorgang und die mit dem Werkzeug herstellbaren Partikelschaumbauteile auswirken. Selbstverständlich können entsprechende Schwingungserzeugungseinrichtungen auch in übrigen Werkzeugwandungsabschnitten des Werkzeugs vorhanden sein.

Dem Werkzeug kann eine hard- und/oder softwaremäßig implementierte Steuereinrichtung zuordenbar oder zugeordnet sein, welche zur Steuerung der über ein entsprechendes Medium oder eine entsprechende Temperiereinrichtung oder eine entsprechende Schwingungserzeugungseinrichtung in die Werkzeugkavität ein- oder abführbaren Energiemenge eingerichtet ist. Eine entsprechende Steuereinrichtung kann konkret z. B. zur Steuerung, d. h. insbesondere Änderung und/oder Anpassung, eines die über das jeweilige Medium ein- oder abführbare Energiemenge relevanten Parameters oder zur Steuerung der Leistungsaufnahme der Temperiereinrichtung oder zur Steuerung der Leistungsaufnahme der Schwingungserzeugungseinrichtung eingerichtet sein. Bei einem entsprechenden Parameter kann es sich z. B. um die Temperatur, den Druck und/oder einen die Strömungseigenschaften des Mediums beeinflussenden Strömungsparameter des Mediums, wie z. B. die Strömungsgeschwindigkeit des Mediums, handeln. Eine entsprechende Steuereinrichtung kann gegebenenfalls ein Bestandteil einer ein entsprechendes Werkzeug umfassenden Vorrichtung zur Verarbeitung Kunststoffpartikelmaterialien zur Herstellung von Partikelschaumbauteilen sein.

Es wurde erwähnt, dass die Werkzeugkörperwandungsabschnitte mit einer Vielzahl an, typischerweise bohrungsartigen bzw. -förmigen, Öffnungen versehen sein können. Auch ein entsprechendes Energieführungselement kann wenigstens eine, typischerweise bohrungsartige bzw. -förmige, Öffnung aufweisen, über welche ein Unterdruck erzeugt bzw. ein im Rahmen der Verarbeitung des Kunststoffpartikelmaterials entstehendes Medium, d. h. z. B. ein Gas und/oder eine Flüssigkeit, entweichen kann bzw. über welche gegebenenfalls ein Energie führendes Medium, insbesondere ein Gas und/oder eine Flüssigkeit, insbesondere auch Dampf bzw. Heißdampf, über das Energieführungselement in die Werkzeugkavität einführbar oder über das Energieführungselement aus der Werkzeugkavität abführbar ist. Über das Energieführungselement kann sonach gegebenenfalls gezielt Dampf bzw. Heißdampf in das Innere des vermittels des Werkzeugs zu verarbeitenden in der Werkzeugkavität befindlichen Kunststoffpartikelmaterials eingebracht werden. Sofern vorhanden, kann eine entsprechende Öffnung des Energieführungselements mit einem entsprechenden Innenraum des Energieführungselements kommunizieren, sodass ein Medium aus bzw. von dem Innenraum über die Öffnung in die Werkzeugkavität ab- bzw. einführbar oder ein Medium aus bzw. von der Werkzeugkavität über die Öffnung in den Innenraum ab- bzw. einführbar ist.

Ein entsprechendes Energieführungselement kann ein zumindest abschnittsweise additiv, insbesondere durch ein selektives Laserschmelzverfahren, hergestelltes Bauteil sein. Ein entsprechendes Energieführungselement kann sonach zumindest abschnittsweise, gegebenenfalls vollständig, additiv, insbesondere durch ein selektives Laserschmelzverfahren, hergestellt sein. Die additive Herstellung des Energieführungselements ermöglicht ein Maximum an konstruktiven Freiheitsgraden im Hinblick auf die funktionelle wie auch konstruktive Ausgestaltung und Konzipierung des Energieführungselements. Die additive Herstellung des Energieführungselements erlaubt insbesondere einen größtmöglichen konstruktiven Freiheitsgrad im Hinblick auf die Ausgestaltung und Konzipierung entsprechender energieführungselementseitiger Innen- bzw. Aufnahmeräume.

Wenngleich vorstehend vorranging von einem Energieführungselement die Rede ist, kann das Werkzeug selbstverständlich mehrere entsprechende Energieführungselemente umfassen, sodass vorstehende Ausführungen im Zusammenhang mit einem entsprechenden Energieführungselement analog für mehrere Energieführungselemente gelten. Sofern das Werkzeug mehrere Energieführungselemente umfasst, können sich diese in Form, Anordnung, Ausrichtung sowie funktioneller Ausstattung, z. B. im Hinblick auf das Vorsehen wenigstens eines entsprechenden Innenraums, gleichen, ähneln oder unterscheiden. Beispielsweise kann wenigstens ein Werkzeugkörperwandungsabschnitt mit mehreren Energieführungselementen gleicher oder ähnlicher Form, Anordnung, Ausrichtung sowie funktioneller Ausstattung oder mit mehreren Energieführungselementen ungleicher Form, Anordnung, Ausrichtung sowie funktioneller Ausstattung ausgestattet sein.

Die Erfindung betrifft neben dem Werkzeug auch eine Vorrichtung zur Verarbeitung von Kunststoffpartikelmaterial zur Herstellung eines, insbesondere dickwandigen, Partikelschaumbauteils. Die Vorrichtung umfasst wenigstens ein wie hierin beschriebenes Werkzeug. Sämtliche Ausführungen im Zusammenhang mit dem Werkzeug gelten sonach analog für die Vorrichtung. Die Vorrichtung kann neben einem entsprechenden Werkzeug gegebenenfalls auch eine das Werkzeug zumindest abschnittsweise, insbesondere vollständig, umgebende Temperier- bzw. Dampfkammer umfassen, in welcher z. B. heiße Luft bzw. Dampf bzw. Heißdampf erzeugbar ist.

Sämtliche Ausführungen im Zusammenhang mit dem Werkzeug gelten analog für die Vorrichtung. Umgekehrt gelten sämtliche Ausführungen im Zusammenhang mit der Vorrichtung analog für das Werkzeug.

Die Erfindung betrifft neben dem Werkzeug und der Vorrichtung auch ein Verfahren zur Verarbeitung von Kunststoffpartikelmaterial zur Herstellung eines, insbesondere dickwandigen, Partikelschaumbauteils, unter Verwendung wenigstens eines wie hierin beschriebenen Werkzeugs oder einer wie hierin beschriebenen Vorrichtung. Sämtliche Ausführungen im Zusammenhang mit dem Werkzeug gelten sonach analog für das Verfahren. Das Verfahren umfasst die Schritte:
- Einbringen wenigstens eines Kunststoffpartikelmaterials bzw. entsprechender Partikel in die Werkzeugkavität des Werkzeugs,
- Durchführen wenigstens einer einen Verbindungsvorgang des Kunststoffpartikelmaterials in der Werkzeugkavität herbeiführenden Maßnahme, insbesondere durch, bevorzugt dampffreies bzw. dampfloses, Einbringen von thermischer Energie in das Kunststoffpartikelmaterial bzw. in die Werkzeugkavität, unter Ausbildung eines Partikelschaumbauteils,
- Entnehmen des Partikelschaumbauteils aus der Werkzeugkavität.

Unter einer dampffreien bzw. dampflosen Einbringung von thermischer Energie ist alternativ oder ergänzend auch ein Einströmen eines temperierten Gases, d. h. z. B. heißer Luft, bzw. ein Durchströmen des zu verbindenden partikulären Kunststoffpartikelmaterials mit einem temperierten Gas, d. h. z. B. heißer Luft, zu verstehen.

Sämtliche Ausführungen im Zusammenhang mit dem Werkzeug und der Vorrichtung gelten analog für das Verfahren. Umgekehrt gelten sämtliche Ausführungen im Zusammenhang mit dem Verfahren analog für das Werkzeug und die Vorrichtung.

Die Erfindung ist anhand von Ausführungsbeispielen in den Zeichnungen näher erläutert. Dabei zeigt:

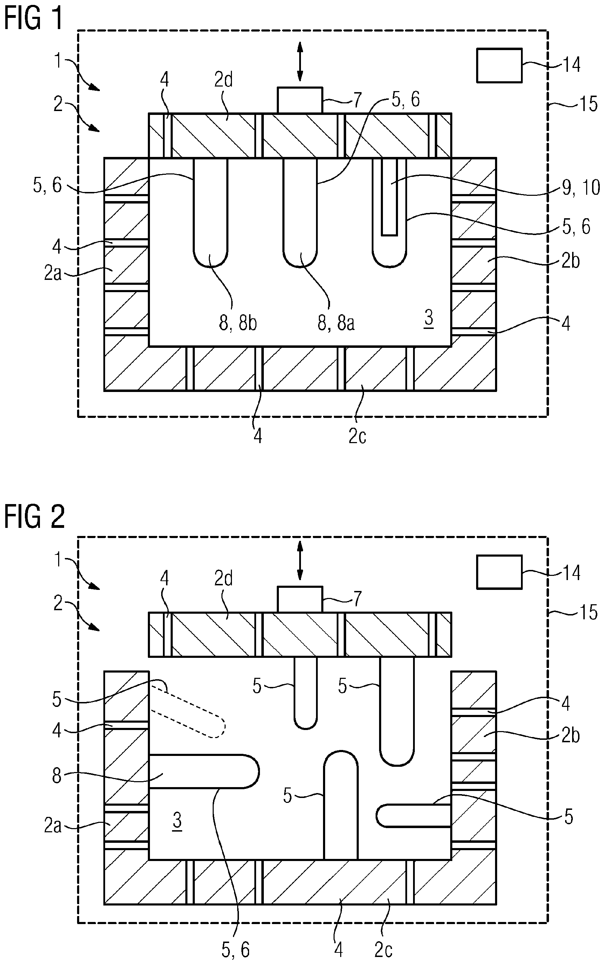

Fig. 1 - 4 jeweils eine Prinzipdarstellung eines Werkzeugs gemäß einem Ausführungsbeispiel.

Fig. 1 zeigt eine Prinzipdarstellung eines Werkzeugs 1 gemäß einem Ausführungsbeispiel in einer geschnittenen Ansicht. Das Werkzeug 1 dient zur Verarbeitung von Kunststoffpartikelmaterial zur Herstellung eines, insbesondere dickwandigen bzw. großvolumigen, Partikelschaumbauteils. Das Werkzeug 1 ist entsprechend zur Verarbeitung von Kunststoffpartikelmaterial zur Herstellung eines, insbesondere dickwandigen bzw. großvolumigen, Partikelschaumbauteils eingerichtet.

Das Werkzeug 1 umfasst einen Werkzeugkörper 2. Der Werkzeugkörper 2 umfasst mehrere Werkzeugkörperwandungsabschnitte 2a - 2d, welche jeweils eine eigene Werkzeugwandung bzw. einen Abschnitt einer solchen bilden. Die Werkzeugkörperwandungsabschnitte 2a - 2d begrenzen bzw. definieren eine Werkzeugkavität 3. Konkret handelt es sich bei den Werkzeugkörperwandungsabschnitten 2a, 2b jeweils um eine die Werkzeugkavität 3 seitlich begrenzende Seitenwandung, bei dem Werkzeugkörperwandungsabschnitt 2c um eine die Werkzeugkavität 3 bodenseitig begrenzende Bodenwandung und bei dem Werkzeugkörperwandungsabschnitt 2d um eine die Werkzeugkavität 3 deckenseitig begrenzende Deckenwandung. Die Werkzeugkavität 3 kann grundsätzlich mit sämtlichen vermittels des Werkzeugs 1 zur Herstellung eines Partikelschaumbauteils verarbeitbaren bzw. zu verarbeitenden Kunststoffpartikelmaterialien befüllt werden, sodass lediglich beispielhaft auf expandiertes Polystyrol verwiesen wird. Bei entsprechenden Kunststoffpartikelmaterialien handelt es sich typischerweise um bereits expandierte Kunststoffpartikelmaterialien.

Einzelne, mehrere oder sämtliche Werkzeugkörperwandungsabschnitte 2a - 2d sind optional mit einer Vielzahl an, typischerweise bohrungsartigen bzw. -förmigen, Öffnungen 4 versehen, über welche ein Unterdruck erzeugt bzw. ein im Rahmen der Verarbeitung des Kunststoffpartikelmaterials entstehendes Medium, d. h. z. B. ein Gas und/oder eine Flüssigkeit, entweichen kann.

Das Werkzeug 1 umfasst ein oder mehrere Energieführungselemente 5, welche eingerichtet sind, im Betrieb des Werkzeugs 1 Energie, hierbei handelt es sich insbesondere um thermische Energie und/oder um Schwingungsenergie, in ein vermittels des Werkzeugs 1 verarbeitbares bzw. zu verarbeitendes in der Werkzeugkavität 3 befindliches Kunststoffpartikelmaterial einzuführen und/oder Energie aus einem vermittels des Werkzeugs 1 verarbeitbaren bzw. zu verarbeitenden in der Werkzeugkavität 3 befindlichen Kunststoffpartikelmaterial abzuführen. Die Energie führenden Eigenschaften der Energieführungselemente 5 ermöglichen insbesondere eine gezielte lokale Übertragung von Energie zwischen dem Energieführungselement 5 und einem in der Werkzeugkavität 3 befindlichen Kunststoffpartikelmaterial, welches ein Verbinden des Kunststoffpartikelmaterials bedingt bzw. unterstützt.

Ersichtlich ist ein jeweiliges Energieführungselement 5 sich von wenigstens einem Werkzeugkörperwandungsabschnitt 2a - 2d in Richtung eines weiteren Werkzeugkörperwandungsabschnitts 2a - 2d, d. h. in dem in Fig. 1 gezeigten Ausführungsbeispiel von dem Werkzeugkörperwandungsabschnitt 2d in Richtung des Werkzeugkörperwandungsabschnitts 2c, abragend in die Werkzeugkavität 3 erstreckend angeordnet bzw. ausgebildet.

Weiter ersichtlich ist ein jeweiliges Energieführungselement 5 länglich ausgebildet. Ein jeweiliges Energieführungselement 5 weist damit einen eine Längsachse des Energieführungselements 5 definierenden länglichen Energieführungselementkörper 6 auf. Der Energieführungselementkörper 6 kann z. B. eine Länge von mehreren Zentimetern bzw. mehreren Dezimetern aufweisen.

Weiter ersichtlich ist ein jeweiliger Energieführungselementkörper 6 als fingerartiger bzw. -förmiger bzw. stiftartiger bzw. -förmiger sich von einem Werkzeugkörperwandungsabschnitt 2a - 2d in die Werkzeugkavität 3 erstreckender Fortsatz ausgebildet. Ein jeweiliger Energieführungselementkörper 6 kann z. B. eine geradlinig verlaufende zylinderartige bzw. -förmige Form aufweisen; es sind jedoch, wenngleich nicht gezeigt, z. B. auch zumindest abschnittsweise gebogen bzw. gewölbt verlaufende Formen sowie wie Freiformen denkbar.

Die Abmessungen bzw. Längenabmessungen jeweiliger Energieführungselemente 5, d. h. insbesondere die Abmessungen bzw. Längenabmessungen jeweiliger Energieführungselementkörper 6, sind typischerweise mit der Maßgabe einer möglichst großen Energieübertragungsfläche in das vermittels des Werkzeugs 1 zu verarbeitende in der Werkzeugkavität 3 befindliche Kunststoffpartikelmaterial, d. h. insbesondere in das Innere des vermittels des Werkzeugs 1 zu verarbeitenden in der Werkzeugkavität 3 befindlichen Kunststoffpartikelmaterials, gewählt. Die Abmessungen der Energieführungselemente 5, d. h. insbesondere die die Erstreckung in die Werkzeugkavität 3 definierenden Längenabmessungen der Energieführungselemente 5, sind sonach typischerweise auf Grundlage der konkreten Abmessungen der Werkzeugkavität 3 gewählt. Ein jeweiliges Energieführungselement 5 kann für ein, insbesondere durch den Abstand zwischen zwei einander gegenüberliegend angeordneten Werkzeugkörperwandungsabschnitten 2a - 2d definiertes, Längen-, Breiten-, oder Tiefenmaß, d. h. je nach Anordnung bzw. Ausrichtung des Energieführungselements 5 eine bestimmte Länge, Breite oder Tiefe, der Werkzeugkavität 3 insbesondere um wenigstens 20%, insbesondere 20 - 50%, bevorzugt mehr als 50%, des Längen-, Breiten-, oder Tiefenmaßes der Werkzeugkavität 3 in die Werkzeugkavität 3 erstreckend angeordnet oder ausgebildet sein. Für eine beispielhafte Betrachtung des Querschnitts der Werkzeugkavität 3 gilt, dass sich ein jeweiliges Energieführungselement 5, wie in Fig. 1 gezeigt, bevorzugt um mehr als 50% über den Querschnitt der Werkzeugkavität 3 in die Werkzeugkavität 3 erstrecken kann. Analoges gilt für eine beispielhafte Betrachtung des Längsschnitts der Werkzeugkavität 3.

Ein jeweiliges Energieführungselement 5 ist damit entsprechend räumlich angeordnet und ausgerichtet, um Energie, etwa im Rahmen einer einen Verbindungsvorgang des Kunststoffpartikelmaterials in der Werkzeugkavität 3 herbeiführenden Maßnahme, in bezogen auf das Volumen der Werkzeugkavität 3 innere Bereiche der Werkzeugkavität 3 bzw. bezogen auf ein Bauteilvolumen eines vermittels des Werkzeugs 1 herzustellenden Partikelschaumbauteils innere Bereiche des Partikelschaumbauteils einzubringen bzw. einzuführen. Gleichermaßen ist ein jeweiliges Energieführungselement 5 räumlich angeordnet und ausgebildet, um Energie, etwa im Rahmen eines einer entsprechenden Maßnahme folgenden Kühlvorgangs, bezogen auf das Volumen der Werkzeugkavität 3 inneren Bereichen der Werkzeugkavität 3 bzw. bezogen auf das Bauteilvolumen eines vermittels des Werkzeugs 1 herzustellenden Partikelschaumbauteils inneren Bereichen des Partikelschaumbauteils auszubringen bzw. abzuführen. Die räumliche Anordnung und Ausrichtung eines jeweiligen Energieführungselemente 5 ermöglicht damit eine gezielte lokale und damit verbesserte Energieübertragung zwischen dem jeweiligen Energieführungselement 5 und einem vermittels des Werkzeugs 1 zu verarbeitenden Kunststoffpartikelmaterials bzw. eines vermittels des Werkzeugs 1 herzustellenden Partikelschaumbauteils; dies gilt insbesondere für die Energieübertragung zwischen dem jeweiligen Energieführungselement 5 und bezogen auf das Bauteilvolumen inneren Bereichen eines vermittels des Werkzeugs 1 zu verarbeitenden Kunststoffpartikelmaterials bzw. eines vermittels des Werkzeugs 1 herzustellenden Partikelschaumbauteils.

In dem in Fig. 1 gezeigten Ausführungsbeispiel sind die Energieführungselemente 5 an einem, wie durch den Doppelpfeil angedeutet, entlang einer Translationsachse bewegbar gelagerten Werkzeugkörperwandungsabschnitt 2d angeordnet bzw. ausgebildet. Der Werkzeugkörperwandungsabschnitt 2d ist zwischen einer eine Offenstellung des Werkzeugs 1, in welcher eine Zugangsmöglichkeit in die Werkzeugkavität 3 geschaffen ist, definierenden ersten Betriebsstellung (obere Stellung, nicht in Fig. 1 gezeigt) und einer eine Schließstellung des Werkzeugs 1, in welcher keine Zugangsmöglichkeit in die Werkzeugkavität 3 geschaffen ist, definierenden zweiten Betriebsstellung (untere Stellung, in Fig. 1 gezeigt), bewegbar. Dem bewegbar gelagerten Werkzeugkörperwandungsabschnitt 2d ist eine wenigstens ein mit diesem direkt oder indirekt koppelbares oder gekoppeltes kraftübertragendes Antriebselement 7 umfassende, z. B. hydraulische, pneumatische, oder motorische, Antriebseinrichtung (nicht gezeigt) zugeordnet, welche zur Erzeugung einer den Werkzeugkörperwandungsabschnitt 2d in eine Bewegung versetzenden Bewegungskraft eingerichtet ist.

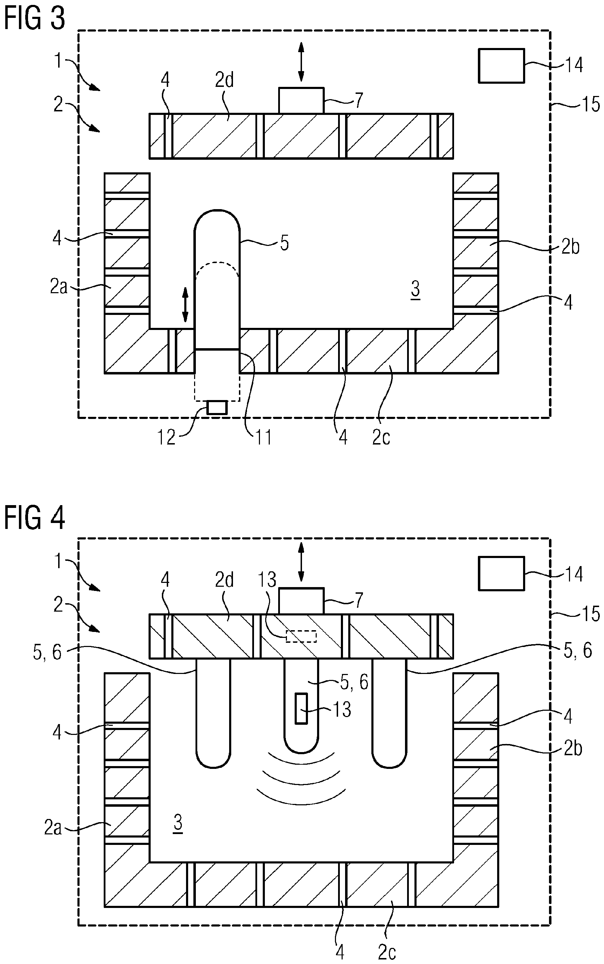

In dem in Fig. 1 gezeigten Ausführungsbeispiel - Analoges gilt für die in den Fig. 2, 3 gezeigten Ausführungsbeispiele - erstreckt sich ein jeweiliges Energieführungselement 5 parallel zu wenigstens einem Werkzeugkörperwandungsabschnitt 2a - 2d in die bzw. durch die Werkzeugkavität 3. Denkbar ist es jedoch, wie in dem in Fig. 2 gezeigten Ausführungsbeispiel beispielhaft gestrichelt dargestellt, auch, dass sich ein Energieführungselement 5 nicht parallel zu wenigstens einem, d. h. insbesondere nicht parallel zu einem einzigen Werkzeugkörperwandungsabschnitt 2a - 2d, in die bzw. durch die Werkzeugkavität 3, sondern sich z. B. schräg bezüglich wenigstens einem Werkzeugkörperwandungsabschnitt 2a - 2d in die bzw. durch die Werkzeugkavität 3 erstreckt.

Anhand des in Fig. 1 gezeigten Ausführungsbeispiels ist ferner ersichtlich, dass jeweilige Energieführungselemente 5 einen mit wenigstens einem Energie führenden Medium, insbesondere einem Gas und/oder einer Flüssigkeit, befüllbaren und/oder von wenigstens einem Energie führenden Medium, insbesondere einem Gas und/oder einer Flüssigkeit, durchströmbaren Innenraum 8 aufweisen können. Durch einen entsprechenden grundsätzlich optionalen Innenraum 8 können die Energieübertragungseigenschaften der Energieführungselemente 5 - diese sind typischerweise bereits von Haus aus aus einem eine gewisse Energieübertragung erlaubenden Material, d. h. z. B. einem Metall, ausgebildet - erweitert bzw. verbessert werden, als die Energieführungselemente 5 mit einem Energie führenden, d. h. z. B. auf eine bestimmte Temperatur temperierten, Medium befüllt oder von einem Medium durchströmt werden können.

Ein entsprechender Innenraum 8 kann, wie beispielhaft anhand des in Fig. 1 mittleren Energieführungselements 5 gezeigt, z. B. als ein mit einem entsprechenden Medium befüllbares Reservoir 8a ausgebildet sein. Ein entsprechendes Reservoir 8a kann z. B. durch eine, gegebenenfalls bohrungsartige bzw. -förmige, Ausnehmung in dem Energieführungselement 5 ausgebildet sein. Alternativ oder ergänzend kann ein entsprechender Innenraum 8, wie beispielhaft anhand des in Fig. 1 linken Energieführungselements 5 gezeigt, z. B. auch als eine wenigstens einen Strömungskanal 8b umfassende Strömungskanalstruktur ausgebildet sein. Ein entsprechender Strömungskanal 8b kann sich insbesondere unterhalb einer im nicht mit einem Kunststoffpartikelmaterial befüllten Zustand des Werkzeugs 1 freiliegend in die Werkzeugkavität 3 ragenden Oberfläche des Energieführungselements 5 entlang dieser erstecken. Ein entsprechender Strömungskanal 8b kann sonach eine gezielte Energieübertragung über eine in die Werkzeugkavität 3 ragende Oberfläche des Energieführungselements 5 ermöglichen.

In analoger Weise könnten, wie beispielhaft anhand des in Fig. 1 rechten Energieführungselements 5 gezeigt, anstelle entsprechender Innenräume 8 auch in die Energieführungselemente 5 integrierte steuerbare Temperiereinrichtungen 9, z. B. in Form von elektrischen Heizeinrichtungen bzw. Heizelementen, und/oder Wärmeübertragungselemente 10, z. B. in Form von Heat-Pipes, vorgesehen sein. Eine entsprechende Temperiereinrichtung 9 bzw. ein entsprechendes Wärmeübertragungselement 10 kann in einem hierfür vorgesehenen, z. B. bohrungsartigen bzw. -förmigen, Aufnahmeraum (nicht näher gezeigt) des Energieführungselements 5 angeordnet bzw. ausgebildet sein. Ein entsprechender Aufnahmeraum kann insbesondere unterhalb einer im nicht mit einem Kunststoffpartikelmaterial befüllten Zustand des Werkzeugs 1 freiliegend in die Werkzeugkavität 3 ragenden Oberfläche, insbesondere sich zumindest abschnittsweise entlang dieser ersteckend, angeordnet oder ausgebildet sein. Mithin kann sich eine entsprechende Temperiereinrichtung 9 bzw. ein entsprechendes Wärmeübertragungselement 10 insbesondere unterhalb einer im nicht mit einem Kunststoffpartikelmaterial befüllten Zustand des Werkzeugs 1 freiliegend in die Werkzeugkavität 3 ragenden Oberfläche zumindest abschnittsweise entlang dieser ersteckend angeordnet oder ausgebildet sein.

Fig. 2 zeigt eine Prinzipdarstellung eines Werkzeugs 1 gemäß einem weiteren Ausführungsbeispiel in einer geschnittenen Ansicht.

Das in Fig. 2 gezeigte Ausführungsbeispiel dient insbesondere dazu, beispielhaft unterschiedliche Anordnungen, Ausrichtungen sowie funktionelle Ausstattungen von Energieführungselementen 5 darzustellen. Anhand von Fig. ist insbesondere ersichtlich, dass, wenn das Werkzeug 1 mehrere Energieführungselemente 5 umfasst, sich diese in Form, Anordnung, Ausrichtung sowie funktioneller Ausstattung, z. B. im Hinblick auf das Vorsehen wenigstens eines entsprechenden Innenraums, gleichen, ähneln oder unterscheiden können. Anhang von Fig. 2 ist insbesondere ersichtlich, dass ein Werkzeugkörperwandungsabschnitt 2a - 2d mit mehreren Energieführungselementen 5 gleicher oder ähnlicher Form, Anordnung, Ausrichtung sowie funktioneller Ausstattung oder mit mehreren Energieführungselementen 5 ungleicher Form, Anordnung, Ausrichtung sowie funktioneller Ausstattung ausgestattet sein kann.

Fig. 3 zeigt eine Prinzipdarstellung eines Werkzeugs 1 gemäß einem weiteren Ausführungsbeispiel in einer geschnittenen Ansicht.

Das in Fig. 3 gezeigte Ausführungsbeispiel dient insbesondere dazu, darzustellen, dass auch ein entsprechendes Energieführungselement 5 unabhängig von einem entsprechenden Werkzeugkörperwandungsabschnitt 2a - 2d relativ zu einem entsprechenden Werkzeugkörperwandungsabschnitt 2a - 2d, an welchem dieses angeordnet oder ausgebildet ist, bewegbar gelagert sein kann. Anhand von Fig. 3 ist insbesondere ersichtlich, dass ein Energieführungselement 5 zwischen einer ersten Stellung (durchgezogen dargestellt), in welcher sich das Energieführungselement 5 um ein erstes Maß von einem Werkzeugkörperwandungsabschnitt 2a - 2d, d. h. hier beispielhaft dem Werkzeugkörperwandungsabschnitt 2c, abragend in die Werkzeugkavität 3 erstreckt, und wenigstens einer zweiten Stellung (gestrichelt dargestellt), in welcher sich das Energieführungselement 5 um ein von dem ersten Maß verschiedenes zweites Maß von dem Werkzeugkörperwandungsabschnitt 2c abragend in die Werkzeugkavität 3 erstreckt, bewegbar gelagert sein kann. Die zweite Stellung des Energieführungselements 5 kann auch eine vollständig in den Werkzeugkörperwandungsabschnitt 2c eingefahrene Stellung des Energieführungselements 5 darstellen, in welcher (sich) das freie Ende des Energieführungselements 5 nicht in die Werkzeugkavität 3 ragt bzw. erstreckt, sodass die der Werkzeugkavität 3 zugewandte Oberfläche des Werkzeugkörperwandungsabschnitts 2c (im Wesentlichen) eben ist; entsprechend stellt die erste Stellung des Energieführungselements 5 eine ausgefahrene Stellung dar, in welcher (sich) wenigstens das freie Ende des Energieführungselements 5 in die Werkzeugkavität 3 ragt bzw. erstreckt, sodass die der Werkzeugkavität 3 zugewandte Oberfläche des Werkzeugkörperwandungsabschnitts 2c aufgrund des sich in die Werkzeugkavität 3 abragend erstreckenden Energieführungselements 5 nicht eben ist.

Die Bewegung eines bewegbar gelagerten Energieführungselements 5 kann sonach insbesondere dazu dienen, das Energieführungselement 5 möglichst weit in das Innere der Werkzeugkavität 3 hereinzufahren bzw. in umgekehrter Weise, z. B. zu Entnahme- bzw. Entformungszwecken eines Partikelschaumbauteils aus der Werkzeugkavität 3, möglichst weist aus dem Inneren der Werkzeugkavität 3 herauszufahren.

Zur Aufnahme eines bewegbar gelagerten Energieführungselements 5 ist der Werkzeugkörperwandungsabschnitt 2c mit wenigstens einem, z. B. bohrungsartigen bzw. -förmigen, Lagerungsabschnitt 11 - hierbei kann es sich z. B. um eine den Werkzeugkörperwandungsabschnitt 2c zumindest abschnittsweise durchsetzende Lagerbohrung handeln, in welcher das Energieführungselement 5 (passgenau) einsetzbar ist - ausgestattet, in welchem das Energieführungselement 5 bewegbar lagerbar bzw. gelagert ist. Einem bewegbar gelagerten Energieführungselement ist typischerweise eine wenigstens ein mit diesem direkt oder indirekt koppelbares oder gekoppeltes kraftübertragendes Antriebselement 12 umfassende, z. B. hydraulische, pneumatische, oder motorische, Antriebseinrichtung (nicht gezeigt) zugeordnet, welche zur Erzeugung einer das Energieführungselement 5 in eine Bewegung versetzenden Bewegungskraft eingerichtet ist.

Fig. 4 zeigt eine Prinzipdarstellung eines Werkzeugs 1 gemäß einem weiteren Ausführungsbeispiel in einer geschnittenen Ansicht.

Das in Fig. 4 gezeigte Ausführungsbeispiel dient insbesondere dazu, darzustellen, dass ein Energieführungselement 5 auch wenigstens eine Schwingungsenergie, d. h. insbesondere Vibrationsenergie, erzeugende Schwingungserzeugungseinrichtung 13, z. B. in Form einer Schallwandlereinrichtung, umfassen oder mit wenigstens einer Schwingungs- bzw. Vibrationsenergie erzeugenden Schwingungserzeugungseinrichtung 13, z. B. in Form einer Schallwandlereinrichtung, gekoppelt sein kann, insbesondere derart, dass über das Energieführungselement 5 Schwingungs- bzw. Vibrationsenergie in die Werkzeugkavität 3 bzw. ein in der Werkzeugkavität 3 befindliches Kunststoffpartikelmaterial einbringbar ist. Die Erzeugung und Einbringung entsprechender Schwingungs- bzw. Vibrationsenergie in die Werkzeugkavität 3 bzw. ein in der Werkzeugkavität 3 befindliches Kunststoffpartikelmaterial kann zu einem Verdichten bzw. Vorverdichten des in der Werkzeugkavität 3 befindlichen Kunststoffpartikelmaterials führen.

Wie anhand von Fig. 4 ersichtlich ist, kann eine entsprechende Schwingungserzeugungseinrichtung 13 an oder in einem Energieführungselement 5 oder an oder in einem Werkzeugkörperwandungsabschnitt 2a - 2d angeordnet oder ausgebildet sein. In Fig. 4 ist beispielhaft eine Anordnung in dem Werkzeugkörperwandungsabschnitt 2a - 2d gezeigt.

Für alle Ausführungsbeispiele gilt, dass dem Werkzeug 1 kann eine hard- und/oder softwaremäßig implementierte Steuereinrichtung 14 zuordenbar oder zugeordnet sein kann, welche zur Steuerung der über das Medium oder die Temperiereinrichtung 9 oder die Schwingungserzeugungseinrichtung 13 in die Werkzeugkavität 3 ein- oder abführbaren Energiemenge eingerichtet ist. Die Steuereinrichtung 14 kann konkret z. B. zur Steuerung, d. h. insbesondere Änderung und/oder Anpassung, eines die über das jeweilige Medium ein- oder abführbare Energiemenge relevanten Parameters oder zur Steuerung der Leistungsaufnahme der Temperiereinrichtung 9 oder zur Steuerung der Leistungsaufnahme der Schwingungserzeugungseinrichtung 13 eingerichtet sein. Bei einem entsprechenden Parameter kann es sich z. B. um die Temperatur, den Druck und/oder einen die Strömungseigenschaften des Mediums beeinflussenden Strömungsparameter des Mediums, wie z. B. die Strömungsgeschwindigkeit des Mediums, handeln.

Die Steuereinrichtung 14 kann gegebenenfalls ein Bestandteil einer das Werkzeug 1 umfassenden, in Fig. 1 rein schematisch dargestellten Vorrichtung 15 zur Verarbeitung Kunststoffpartikelmaterialien zur Herstellung von Partikelschaumbauteilen sein. Die Vorrichtung 15 kann neben dem Werkzeug 1 auch einen das Werkzeug 1 zumindest abschnittsweise, insbesondere vollständig, umgebende Temperier- bzw. Dampfkammer (nicht gezeigt) umfassen, in welcher heiße Luft bzw. Dampf bzw. Heißdampf erzeugbar ist.

Für alle Ausführungsbeispiele gilt ferner, dass auch jeweilige Energieführungselemente 5 wenigstens eine, typischerweise bohrungsartige bzw. - förmige, Öffnungen 14 - beispielhaft in Fig. 2 für das sich von dem Werkzeugkörperwandungsabschnitt 2a abragend in die Werkzeugkavität 3 erstreckende Energieführungselement 5 gezeigt - aufweisen können, über welche ein Unterdruck erzeugt bzw. ein im Rahmen der Verarbeitung des Kunststoffpartikelmaterials entstehendes Medium, d. h. z. B. ein Gas und/oder eine Flüssigkeit, entweichen kann und/oder über welche ein Energie führendes Medium, insbesondere ein Gas und/oder eine Flüssigkeit, insbesondere auch Dampf bzw. Heißdampf, über ein Energieführungselement 5 in die Werkzeugkavität 3 einführbar oder aus der Werkzeugkavität 3 abführbar ist. Sofern vorhanden, können entsprechende Öffnungen 14 eines Energieführungselements 5 mit einem entsprechenden Innenraum 8 des Energieführungselements 5 kommunizieren, sodass ein Medium aus bzw. von dem Innenraum 8 über die Öffnungen 14 in die Werkzeugkavität 3 ab- bzw. einführbar oder ein Medium aus bzw. von der Werkzeugkavität 3 über die Öffnungen 14 in den Innenraum 8 ab- bzw. einführbar ist.

Weiterhin gilt für alle Ausführungsbeispiele, dass ein jeweiliges Energieführungselement 5 ein zumindest abschnittsweise additiv, insbesondere durch ein selektives Laserschmelzverfahren, hergestelltes Bauteil sein kann. Ein jeweiliges Energieführungselement 5 kann sonach zumindest abschnittsweise, gegebenenfalls vollständig, additiv, insbesondere durch ein selektives Laserschmelzverfahren, hergestellt sein.

Mit dem in den Fig. gezeigten Ausführungsbeispielen dargestellten Werkzeugen 1 lässt sich ein Verfahren zur Verarbeitung von Kunststoffpartikelmaterial zur Herstellung eines, insbesondere dickwandigen, Partikelschaumbauteils, implementieren. Das Verfahren umfasst die Schritte:
- Einbringen wenigstens eines Kunststoffpartikelmaterials in die Werkzeugkavität 3 des Werkzeugs 1,
- Durchführen wenigstens einer einen Verbindungsvorgang des Kunststoffpartikelmaterials in der Werkzeugkavität 3 herbeiführenden Maßnahme, insbesondere durch, bevorzugt dampffreies bzw. dampfloses, Einbringen von thermischer Energie in das Kunststoffpartikelmaterial bzw. in die Werkzeugkavität 3, unter Ausbildung eines Partikelschaumbauteils,
- Entnehmen des Partikelschaumbauteils aus der Werkzeugkavität 3.

## Patentansprüche

1. Werkzeug (1) zur Verarbeitung von Kunststoffpartikelmaterial zur Herstellung eines, insbesondere dickwandigen, Partikelschaumbauteils, umfassend einen eine durch mehrere Werkzeugkörperwandungsabschnitte (2a - 2d) begrenzte Werkzeugkavität (3) aufweisenden Werkzeugkörper (2), **gekennzeichnet durch**
wenigstens ein sich von wenigstens einem Werkzeugkörperwandungsabschnitt (2a - 2d) abragend in die Werkzeugkavität (3) erstreckend angeordnetes oder ausgebildetes Energieführungselement (5), welches eingerichtet ist, im Betrieb des Werkzeugs (1) Energie in ein vermittels des Werkzeugs (1) verarbeitbares oder zu verarbeitendes, insbesondere in der Werkzeugkavität (3) befindliches, Kunststoffpartikelmaterial einzuführen und/oder Energie aus einem vermittels des Werkzeugs (1) verarbeitbaren oder zu verarbeitenden, insbesondere in der Werkzeugkavität (3) befindlichen, Kunststoffpartikelmaterial abzuführen.

2. Werkzeug nach Anspruch 1, **dadurch gekennzeichnet, dass** das Energieführungselement (5) sich von einem ersten Werkzeugkörperwandungsabschnitt (2a - 2d) abragend in Richtung eines dem ersten Werkzeugkörperwandungsabschnitt (2a - 2d) gegenüberliegend angeordneten oder ausgebildeten zweiten Werkzeugkörperwandungsabschnitts (2a - 2d) erstreckend angeordnet oder ausgebildet ist.

3. Werkzeug nach Anspruch 1 oder 2, **dadurch gekennzeichnet, dass** das wenigstens eine Energieführungselement (5) an oder in einem nicht bewegbar gelagerten Werkzeugkörperwandungsabschnitt (2a - 2d) angeordnet oder ausgebildet ist, oder
das wenigstens eine Energieführungselement (5) an oder in einem, insbesondere zwischen einer eine Offenstellung des Werkzeugs (1), in welcher eine Zugangsmöglichkeit in die Werkzeugkavität (3) geschaffen ist, definierenden ersten Betriebsstellung und einer eine Schließstellung des Werkzeugs (1), in welcher keine Zugangsmöglichkeit in die Werkzeugkavität (3) geschaffen ist, definierenden zweiten Betriebsstellung, bewegbar gelagerten Werkzeugkörperwandungsabschnitt (2a - 2d) angeordnet oder ausgebildet ist.

4. Werkzeug nach einem der vorhergehenden Ansprüche, **dadurch gekennzeichnet, dass** das wenigstens eine Energieführungselement (5) relativ zu dem Werkzeugkörperwandungsabschnitt (2a - 2d), insbesondere zwischen einer ersten Stellung, in welcher sich das Energieführungselement (5) um ein erstes Maß von dem Werkzeugkörperwandungsabschnitt (2a - 2d) abragend in die Werkzeugkavität (3) erstreckt, und wenigstens einer zweiten Stellung, in welcher sich das Energieführungselement (5) um ein von dem ersten Maß verschiedenes zweites Maß von dem Werkzeugkörperwandungsabschnitt (2a - 2d) abragend in die Werkzeugkavität (3) erstreckt, bewegbar gelagert ist.

5. Werkzeug nach einem der vorhergehenden Ansprüche, **dadurch gekennzeichnet, dass** sich das wenigstens eine Energieführungselement (5) für ein, insbesondere durch den Abstand zwischen zwei einander gegenüberliegend angeordneten Werkzeugkörperwandungsabschnitten (2a - 2d) definiertes, Längen-, Breiten-, oder Tiefenmaß der Werkzeugkavität (3) insbesondere um wenigstens 20%, insbesondere 20 - 50%, bevorzugt mehr als 50%, des Längen-, Breiten-, oder Tiefenmaßes der Werkzeugkavität (3) in die Werkzeugkavität (3) erstreckend angeordnet oder ausgebildet ist.

6. Werkzeug nach einem der vorhergehenden Ansprüche, **dadurch gekennzeichnet, dass** das wenigstens eine Energieführungselement (5) wenigstens einen mit wenigstens einem Energie führenden Medium, insbesondere einem Gas und/oder einer Flüssigkeit, befüllbaren Innenraum (8) und/oder wenigstens einen von wenigstens einem Energie führenden Medium, insbesondere einem Gas und/oder einer Flüssigkeit, durchströmbaren Innenraum (8) aufweist.

7. Werkzeug nach Anspruch 6, **dadurch gekennzeichnet, dass** der Innenraum (8) als ein mit einem Medium befüllbares Reservoir (8a) ausgebildet ist.

8. Werkzeug nach Anspruch 6 oder 7, **dadurch gekennzeichnet, dass** der Innenraum (8) als eine wenigstens einen, sich insbesondere unterhalb einer im nicht mit einem Kunststoffpartikelmaterial befüllten Zustand des Werkzeugs (1) freiliegend in die Werkzeugkavität (3) ragenden Oberfläche zumindest abschnittsweise entlang dieser ersteckenden, Strömungskanal (8b) umfassende Strömungskanalstruktur ausgebildet ist.

9. Werkzeug nach einem der vorhergehenden Ansprüche, **dadurch gekennzeichnet, dass** das wenigstens eine Energieführungselement (5) wenigstens eine, insbesondere integrierbare oder integrierte, steuerbare Temperiereinrichtung (9), insbesondere in Form einer elektrischen Heizeinrichtung, umfasst.

10. Werkzeug nach einem der vorhergehenden Ansprüche, **dadurch gekennzeichnet, dass** das wenigstens eine Energieführungselement (5) wenigstens ein Wärmeübertragungselement (10), insbesondere eine Heat-Pipe, umfasst, über welches Energie in die Werkzeugkavität (3) einführbar oder aus dieser abführbar ist.

11. Werkzeug nach einem der vorhergehenden Ansprüche, **dadurch gekennzeichnet, dass** das wenigstens eine Energieführungselement (5) wenigstens eine Schwingungsenergie, insbesondere Vibrationsenergie, erzeugende Schwingungserzeugungseinrichtung (13) umfasst oder mit wenigstens einer Schwingungsenergie erzeugenden Schwingungserzeugungseinrichtung (13) gekoppelt ist, insbesondere derart, dass über das Energieführungselement (5) Schwingungsenergie in ein in der Werkzeugkavität (3) befindliches Kunststoffpartikelmaterial einbringbar ist.

12. Werkzeug nach einem der vorhergehenden Ansprüche, **dadurch gekennzeichnet, dass** das wenigstens eine Energieführungselement (5) wenigstens eine, insbesondere mit einem entsprechenden Innenraum (8) des Energieführungselements (5) kommunizierende, Öffnung (14) aufweist, über welche ein Energie führendes Medium, insbesondere ein Gas und/oder eine Flüssigkeit, über das Energieführungselement (5) in die Werkzeugkavität (3) einführbar oder über das Energieführungselement (5) aus der Werkzeugkavität (3) abführbar ist.

13. Werkzeug nach einem der vorhergehenden Ansprüche, **dadurch gekennzeichnet, dass** das wenigstens eine Energieführungselement (5) aus einem thermisch leitfähigen Material, insbesondere einem thermisch leitfähigen Metall, und/oder einer thermisch leitfähigen Materialstruktur gebildet ist.

14. Vorrichtung (15) zur Verarbeitung von Kunststoffpartikelmaterial zur Herstellung eines, insbesondere dickwandigen, Partikelschaumbauteils, umfassend wenigstens ein Werkzeug (1) nach einem der vorhergehenden Ansprüche.

15. Verfahren zur Verarbeitung von Kunststoffpartikelmaterial zur Herstellung eines, insbesondere dickwandigen, Partikelschaumbauteils, unter Verwendung wenigstens eines Werkzeugs (1) nach einem der Ansprüche 1 bis 13 oder einer Vorrichtung (15) nach Anspruch 14, **gekennzeichnet durch** die Schritte:
- Einbringen wenigstens eines Kunststoffpartikelmaterials in die Werkzeugkavität (3) des Werkzeugs (1),
- Durchführen wenigstens einer einen Verbindungsvorgang des Kunststoffpartikelmaterials in der Werkzeugkavität (3) herbeiführenden Maßnahme, insbesondere durch, bevorzugt dampffreies bzw. dampfloses, Einbringen von thermischer Energie in das Kunststoffpartikelmaterial, unter Ausbildung eines Partikelschaumbauteils,
- Entnehmen des Partikelschaumbauteils aus der Werkzeugkavität (3).
